(19) Europäisches Patentamt
European Patent Office
Office européen des brevets

(11) EP 0 511 660 B1

(12) **EUROPEAN PATENT SPECIFICATION**

(45) Date of publication and mention
of the grant of the patent:
**06.11.1996 Bulletin 1996/45**

(51) Int Cl.6: **G01B 11/14**, G01B 11/02

(21) Application number: **92107322.7**

(22) Date of filing: **29.04.1992**

(54) **gap measuring device and manufacturing method of the same**

Vorrichtung zur Spaltmessung und Verfahren zu ihrer Herstellung

Dispositif pour mesurer un écartement et méthode pour sa fabrication

(84) Designated Contracting States:
**DE FR GB**

(30) Priority: **30.04.1991 JP 128670/91**

(43) Date of publication of application:
**04.11.1992 Bulletin 1992/45**

(73) Proprietor: **Dainippon Screen Mfg. Co., Ltd.
Kamikyo-ku Kyoto 602 (JP)**

(72) Inventors:
• **Sakai, Takamasa, c/o Dainippon Screen Mfg. Co.
Fushimi-ku, Kyoto (JP)**
• **Kouno, Motohiro, c/o Dainippon Screen Mfg. Co.
Fushimi-ku, Kyoto (JP)**

• **Hirae, Sadao, c/o Dainippon Screen Mfg. Co.
Fushimi-ku, Kyoto (JP)**
• **Nakatani, Ikuyoshi,
c/o Dainippon Screen Mfg. Co.
Fushimi-ku, Kyoto (JP)**

(74) Representative: **Goddar, Heinz J., Dr. et al
FORRESTER & BOEHMERT
Franz-Joseph-Strasse 38
80801 München (DE)**

(56) References cited:
**EP-A- 0 459 418       US-A- 3 873 209
US-A- 4 490 618       US-A- 4 681 451**

## Description

The present invention relates to a gap measuring device for measuring a narrow gap utilizing the tunnel effect of light waves reflected on the boundary plane under the condition of total reflection.

High precision laser range finders such as Michelson interferometers are used for the precise measurement of distances by utilizing the interference patterns of laser beams.

High precision laser range finders determine a distance based on the principle that the number of interference fringes formed due to the interference of laser beams is directly proportional to a displacement of a movable mirror (or a rectangular prism).

High precision laser range finders are, however, not suitable for measuring a gap between a mask and a wafer or for measuring the unevenness of a wafer in the printing process, i.e. in printing a mask pattern onto the waver in the manufacture of semiconductors. The high precision laser range finders require the movement of the mirror in response to the dimensions of a gap between the mask and the waver or to the value of the wafer unevenness. This is, however, impossible when the dimension of the gap or the unevenness in unknown.

The document EP-A-0 459 458 which is effective under article 54 (3) EPC discloses a device for measuring a gap between a surface of a specimen and a specific member, comprising a substrate, a laser source mounted on said substrate, a laser source mounted on said substrate for emitting a laserbeam, an optical waveguide having a reflecting surface comprising said specific member for reflecting said laserbeam at said reflecting surface such that geometrical optical total reflection occurs; and a photosensor mounted on said substrate for measuring intensity of said laser beam reflected by said reflecting surface.

It is the object of the present invention to provide a simply constructed gap measuring device for precisely measuring a narrow gap or the unevenness of a surface.

This object is achieved by a device as defined in claim 1.

According to an aspect of the present invention, the substrate is a semi conductor substrate, the laser source and the photosensor are semiconductor elements formed on the semi conductor substrate, and the reflecting surface of the optical waveguide is parallel to a cleavage plane of the semi conductor substrate.

In the preferred embodiment, the optical waveguide is made of semi-conductor material; and the photosensor is a photo diode of a Shottky barrier type formed in a part of the optical waveguide.

Preferably, the substrate, the laser source and the photo sensor are made of a semi conductor material including gallium and arsenic and the optical waveguide is made of a semi conductor material including gallium, aluminium and arsenic.

Moreover, the laser source comprises a resonator utilizing the Bragg reflection of a light wave.

In another embodiment, the optical waveguide comprises a diffraction grating for deflecting the laser beam such that the beam is incident to the reflecting surface so that geometric total optical reflection occurs.

The present invention is further directed to a method of manufacturing a device for measuring a gap between a surface of a specimen and a specific plane, comprising the steps of: (a) preparing a semi-conductor substrate; (b) forming an optical waveguide layer on a main surface of the semi-conductor substrate by epitaxial growth; (c) forming a laser source on the semi-conductor substrate for emitting a laser beam to be introduced into the optical waveguide layer; (d) forming a photosensor in a part of the optical waveguide layer for receiving the laser beam; and (e) shaping the side surfaces of the semi conductor substrate and the optical waveguide layer to make a flat plane perpendicular to the main surface of the semi-conductor substrate such that the laser beam output from the laser source is reflected at the flat plane when the condition of geometric total optical reflection is satisfied and the reflected laser beam is received by the photosensor.

The present invention is still further directed to a method of manufacturing a device for measuring a gap between a surface of a specimen and a specific plane, comprising the steps of : (a) preparing a semi-conductor substrate; (b) forming an optical waveguide layer on a main surface of the semi-conductor substrate; (c) forming a laser source on the substrate; (d) forming a photosensor on the substrate; (e) forming a first grating on a surface of the optical waveguide layer for deflecting a laser beam, and forming the side surfaces of the semi-conductor substrate and the optical wave guide layer to make a flat plane perpendicular to the main surface of the semi conductor substrate, whereby a laser beam output from the laser source is deflected by the first grating and reflected at the flat plane when the condition of geometric total optical reflection is satisfied and the reflected laser beam is received by the photosensor.

Preferably, the step (e) includes a step of making the flat plane parallel to a cleavage plane of the semi-conductor substrate.

Further, the step (c) comprises the steps of: (c-1) forming a semi-conductor layer; and (c-2) forming a second grating on the semi-conductor layer by holographic exposure, the second grating functioning as a resonator of the laser source utilizing the Bragg reflection of a light wave.

These and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a schematic view illustrating the structure of a gap-measuring apparatus as described in EP-A-0 459 458.
Fig. 2 is a diagram showing an optical path of light transmitted into a double layer structure;
Fig. 3 is a diagram showing an optical path of light transmitted into a triple layer structure;
Figs. 4A through 4C are graphs showing the reflectance plotted against the dimension of a gap;
Figs. 5A through 5C are graphs showing the transmittance plotted against the dimension of a gap;
Figs. 6A through 10B are graphs showing the transmittance plotted against the dimension of a gap under various conditions;
Fig. 11 is a schematic view illustrating a gap measuring apparatus;
Fig. 12 is a schematic view illustrating a surface condition detecting apparatus;
Fig. 13 is a graph showing the damping of the electric field from a boundary;
Fig. 14 is a graph showing the relationship between the gap and the reflection factor at certain incident angles;
Fig. 15 is a graph showing the variation in the measurement error of the gap against the dimension of the gap at certain incident angles;
Fig. 16 is a graph showing variation in the measurement error of the gap against the dimension of the gap of certain gradients of the plane of polarization;
Fig. 17 is a perspective view illustrating an embodiment of an optical measurement unit;
Figs 18 (a) through 18 (e) are explanatory views showing the manufacturing process of the optical measurement unit of Fig. 17.
Fig. 19 is a cross sectional view illustrating the structure of a Schottky barrier photodiode;
Fig. 20 is a perspective view illustrating an optical measurement unit as another embodiment;
Figs 21 (a) through 21 (e) are explanatory views showing the manufacturing process of the optical measurement unit of Fig. 20.
Fig. 22 is an explanatory view showing the relationship between the grating and the deflection angle of the incident light;
Fig. 23 is a schematic view illustrating an example of a device for detecting the surface condition;
Fig. 24 is a schematic view illustrating another example of a device for detecting the surface condition;
Fig. 25 is a schematic view illustrating the structure of a three-dimensional piezoelectric actuator unit; and
Fig. 26 is a schematic view showing a modification of the optical measurement unit.

## DESCRIPTION OF THE PREFERRED EMBODIMENTS

Tunnel Effect

The tunnel effect of a light wave when the condition of total reflection has been satisfied will be explained below. The gap measuring apparatus and surface unevenness detecting apparatus embodying the present invention will be explained thereafter.

The tunnel effect is generally observed in physical phenomena consisting of a wave function, including the reflection of light. More specifically, when the boundary conditions are present on the boundary plane of a medium, the wave function exponentially attenuates outside the boundary plane. This means that the wave enters or tunnels from the boundary plane as far as its wavelength.

When light is incident on an optically thin medium, e.g., air, from an optically dense medium e.g., glass, at an incident angle greater that its critical angle, total reflection in terms of geometrical optics is observed. When the propagation of light (or an electric field) is expressed as a wave function, the wave function representing the light (or the electric field) is transmitted into the optically thin medium (or the air) in spite of the total reflection condition in terms of geometrical optics.

Fig. 2 is a diagram showing an optical path of light transmitted from an optically dense medium M1 to an optically thin medium M2. Incident light Li is linearly polarized light having a polarization direction in the x-y plane. In other words, its electrostatic vector is parallel to the x-y plane. The incident light Li is incident on a boundary between the media M1 and M2 at an incident angle 01. The refractive indices of the media M1 and M2 are n1 and n2 respectively. Fig. 2 shows light Lt entering the medium M2 at an angle $\theta2$ as well as reflected light Lr passing through the medium M1 although this figure satisfies the total reflection condition in terms of geometrical optics. The electric field Et of the through-light Lt is expressed by the following wave function:

$$Et = E0 * \exp(-kt*\alpha*y) \exp[i*\{kt(n1/n2)\sin\theta1*x-\omega*t\}] \tag{1}$$

where E0 is a constant; kt and $\alpha$ are constants expressed by the following equations (2) and (3), respectively; and $\omega$ represents the angular frequency of the light.

$$kt = n2 * (2 * \pi) / \lambda \tag{2}$$

$$\alpha = [(n1/n2)^2 * (\sin\theta1)^2 - 1]^{0.5} \tag{3}$$

where $\lambda$ denotes the wavelength of the light.

In equation (1), the term $\exp(-kt*\alpha*y)$ shows that the electric field of the light wave is transmitted into the medium M2 and the amplitude of the electric field lEtl exponentially decreases with distance as far as the wavelength $\lambda$.

Equations used here are equivalent to the equations shown in Feynman, Leighton and Sands, "Feynman Physics", vol. IV, Electromagnetic Waves and Properties (Japanese version); Iwanami, March, 1986; page 196, line 20.

If the medium M2 is air, n2 is equal to 1.0 and the equations (1) through (3) are rewritten as the following equations (1a) through (3a):

$$Et = E0 * \exp(-kt*\alpha*y) \exp[i*\{kt*n1*\sin\theta*x-\omega*t\}] \tag{1a}$$

$$kt = (2\pi) / \lambda \tag{2a}$$

$$\alpha = [(n1*\sin\theta1)^2 - 1]^{0.5} \tag{3a}$$

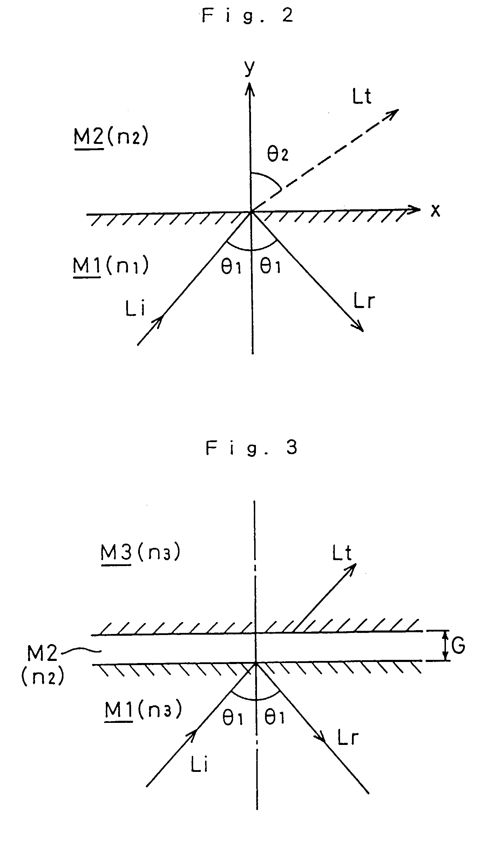

Suppose that, from the state of Fig. 2, another optically dense medium M3 comes toward the medium M1, is shown in Fig. 3, defining a gap G between the medium M1 and the third medium M3 separated by air M2 when the gap G decreases to approximately the wavelength $\lambda$, a dipole moment of the third medium M3 is excited and the light wave begins to be transmitted into the third medium M3. The electric field of the light Lt transmitted into the third medium M3 is approximated by the equations (1a) through (3a) stated above. Here the intensity of the transmitted light Lt is known to be proportional to the square of the amplitude lEtl of the electric field.

The gap G can be found from the relationship between the intensity of the transmitted light Lt and the gap G according to the equations (1a) through (3a) namely, the gap G can be measured by calculating in advance the relationship between the intensity of the transmitted light Lt and the gap G, and by substituting the observed intensity of the transmitted light Lt into the relationship. For a more precise calculation of the electric field Et of the transmitted light Lt, Maxwell's equations, instead of the equations 1(a) through 3(a) would need to be solved for the boundary conditions for the three layer structure consisting of the three media M1, M2, and M3. The calculation can be executed with a computer; a computer program applicable to the calculation is, for example, shown in Tohru Kusakawa, "Lens Optics", Tokai University Press, 1988, pages 295-310.

Practically, the intensity of the reflected light Lr is measured rather than the intensity of the light Lt transmitted into the optically dense medium M3 because of the difficulty in measuring the latter. The relationship between the intensities Pi, Pr, and Pt of the incident light Li, the reflected light Lr, and the transmitted light Lt, respectively, is expressed as follows:

$$Pt / Pi = 1 - Pr / Pi \tag{4}$$

Table 1 shows the reflectance Rr (= Pr/Pi) of the reflected light Lr given by the precise calculation of the electric field of the light wave propagated through the three layer structure. The results in Table 1 are for s-polarized light, p-polarized light and linearly polarized light having a polarization direction at an angle of 45 degrees to each of s- and p-polarized light (hereinafter referred to as s+p polarized light).

## Table 1

| Gap | Reflectance Rr (=Pr/Pi) | | |
|---|---|---|---|
| G (μm) | s-polarized | p-polarized | s+p polarized |
| 0.0 | 0.285 | 0.081 | 0.183 |
| 0.1 | 0.508 | 0.152 | 0.330 |
| 0.2 | 0.758 | 0.325 | 0.542 |
| 0.3 | 0.881 | 0.524 | 0.702 |
| 0.4 | 0.939 | 0.691 | 0.815 |
| 0.5 | 0.967 | 0.810 | 0.889 |
| 0.6 | 0.982 | 0.887 | 0.935 |
| 0.7 | 0.990 | 0.934 | 0.962 |
| 0.8 | 0.994 | 0.962 | 0.978 |
| 0.9 | 0.997 | 0.979 | 0.988 |
| 1.0 | 0.998 | 0.988 | 0.993 |

Conditions for Table 1 are as follows:

| | |
|---|---|
| n1 = 1.5103, | k1 = 0.0 (borosilicate glass, BK7) |
| n2 = 1.0, | k2 = 0.0 (air) |
| n3 = 3.673, | k3 = 0.005 (silicon) |
| λ = 0.827 μm (GaAlAs laser) | |
| θ1 = 45 degrees | |

where k1, k2, and k3 denote extinction coefficients of the media M1 (BK7), M2 (air), and M3 (silicon), respectively.

Linearly polarized light can be separated into an s-polarized light component and a p-polarized light component. When the polarization direction of a linearly polarized light deviates at an angle of θ to that of the s-polarized light, the reflectance Rra of the linearly polarized light is a function of the reflectance Rrs of the s-polarized light and the reflectance Rrp of the p-polarized light is given below:

$$Rra = \cos^2\theta * Rrs + \sin^2\theta * Rrp \quad (5) \tag{5}$$

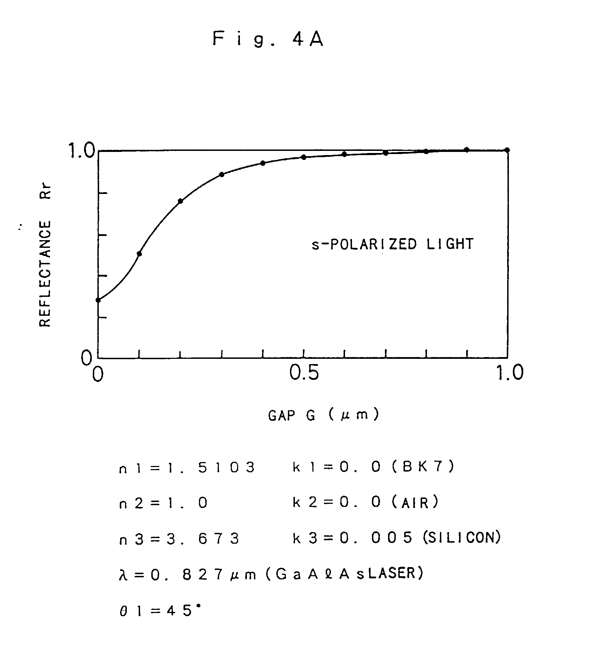

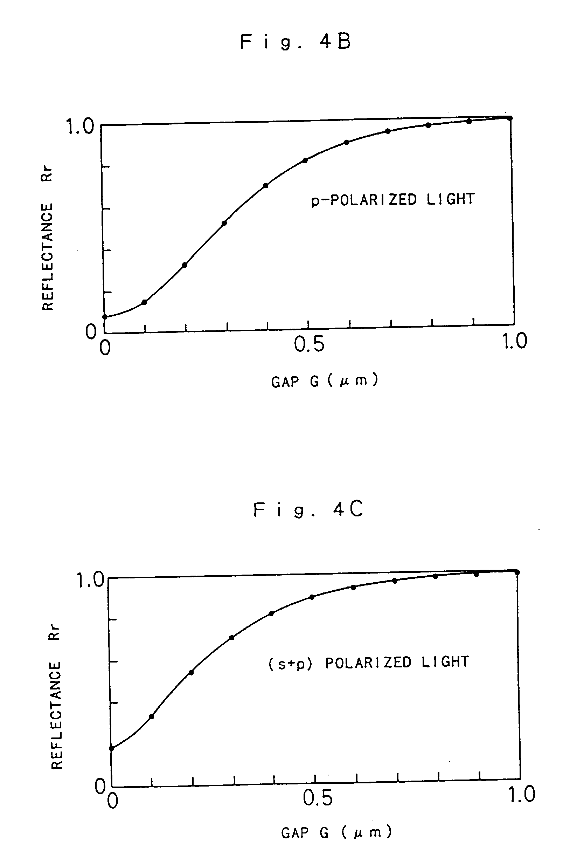

Figs. 4A through 4C are graphs illustrating the relationship in Table 1. In these graphs, the abscissa is the gap G and the ordinate is the reflectance Rr. When the gap G is far larger than the wavelength λ, the reflectance Rr is approximately 100 %, which means total reflection. When the gap G is equal to zero, on the other hand, the reflectance Rr is close to zero, which means that almost all of light is transmitted.

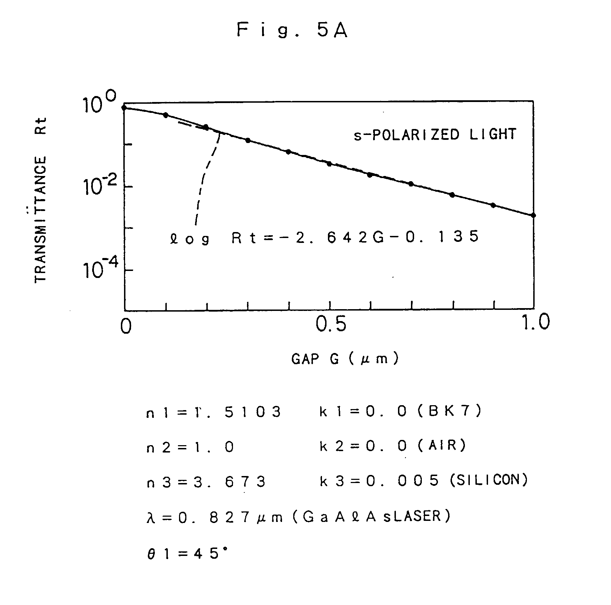

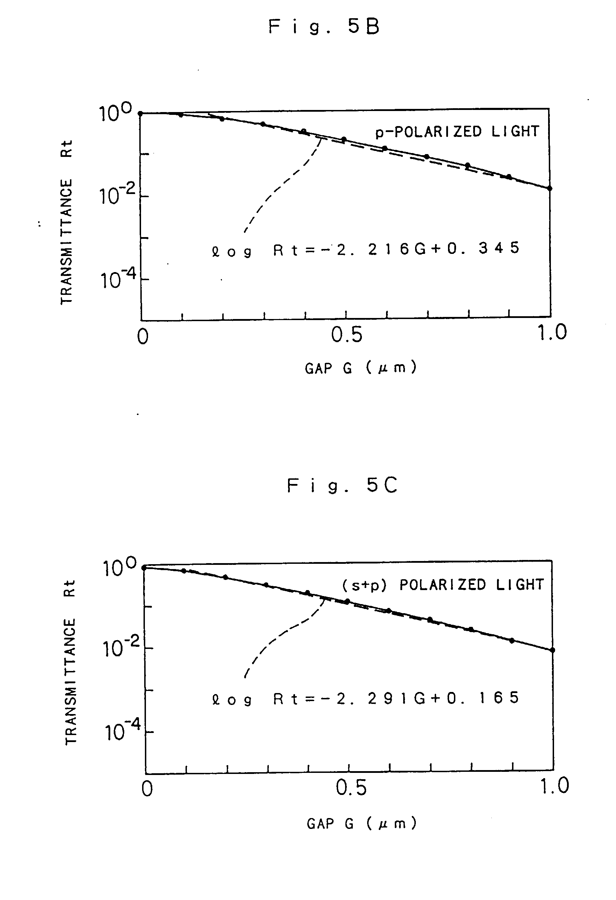

As equation (4) clearly shows, the transmittance Rt (= Pt/Pi) is equal to (I - Rr). Figs. 5A through 5C are graphs showing the transmittance Rt plotted against the gap G. The ordinate scale for the transmittance Rt is logarithmic. The transmittance curve log(Rt) can be approximated by a straight line except for a range of the gap G near zero. Broken lines in Figs. 5A through 5C show approximations in the range of the gap G between 0.2 and 1.0 μm and are expressed as follows:

$$\log Rt = -2.642G - 0.135 \tag{6a}$$

$$\log Rt = -2.216G - 0.345 \tag{6b}$$

$$\log Rt = -2.291G - 0.165 \tag{6c}$$

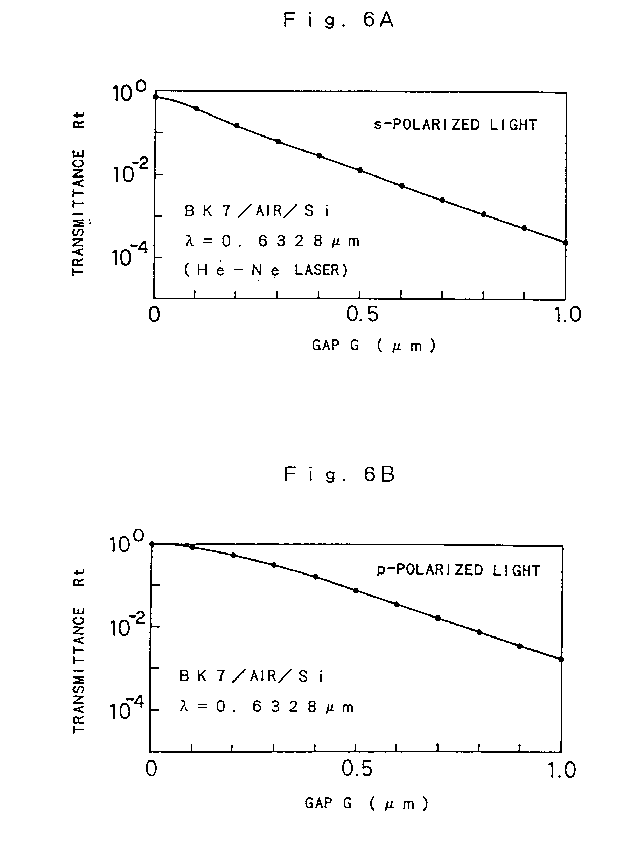

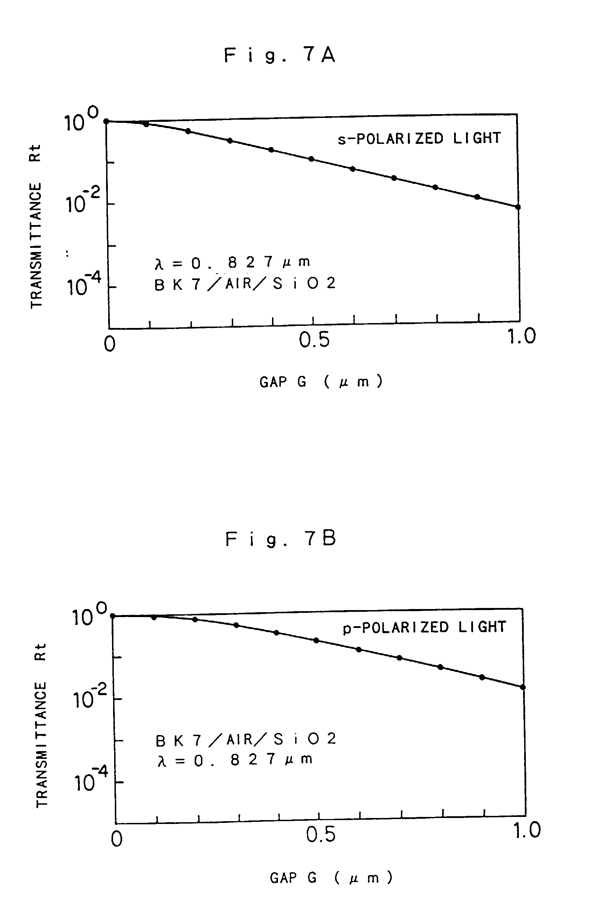

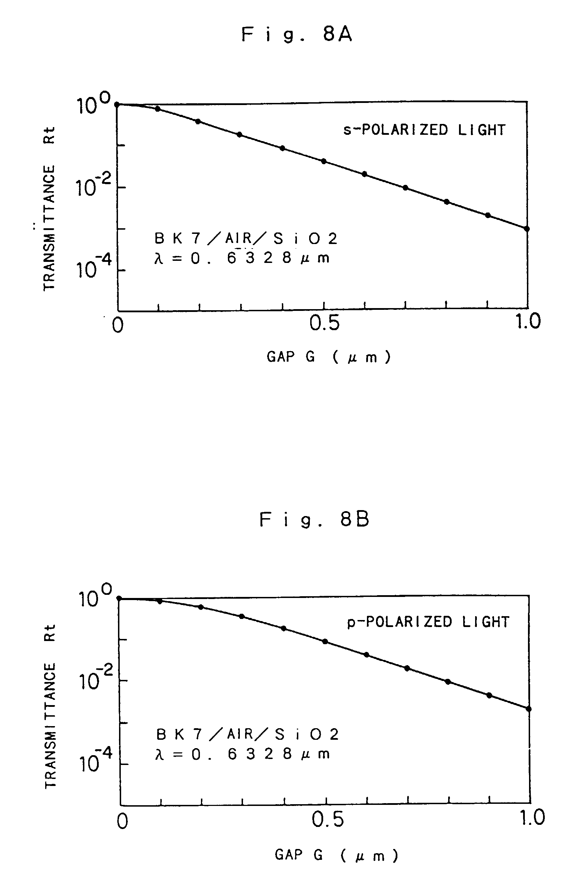

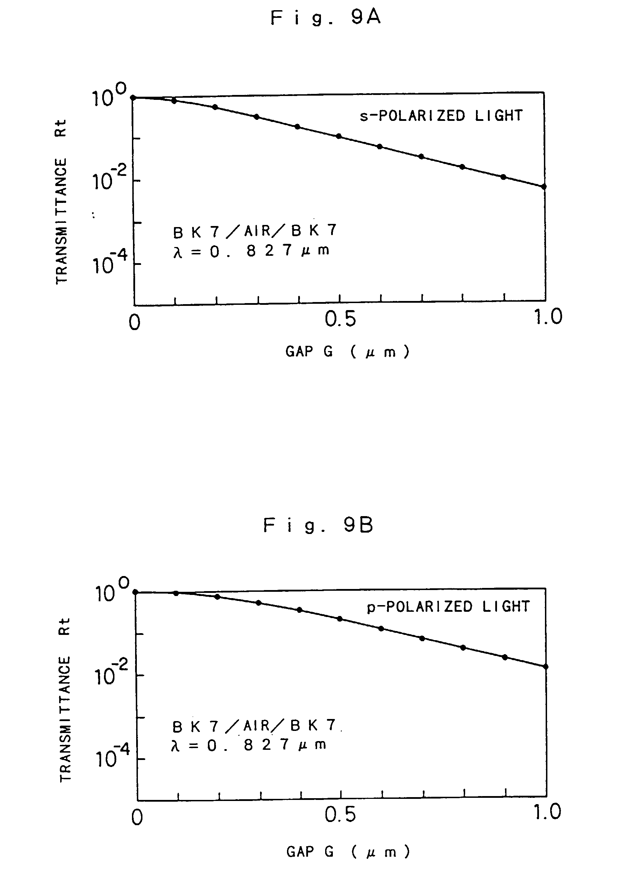

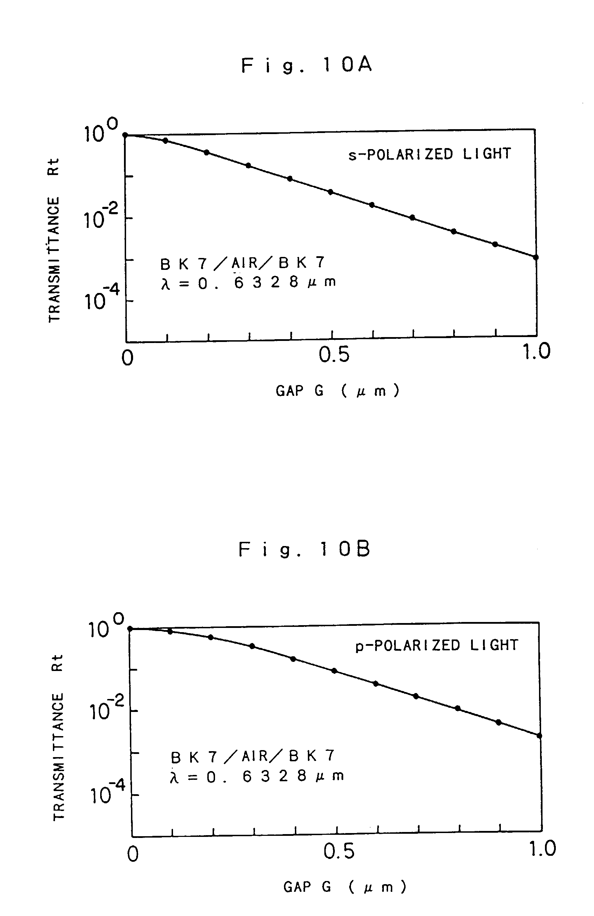

Figs. 6A, 6B through Figs. 10A, 10B show the transmittance Rt plotted against the gap G for various wavelengths of the laser beam and for various materials of the third specimen M3. The constituents of each test piece are shown in the manner of medium M1/medium M2/medium M3. The transmittance of (s+p) polarized light is omitted since it can be calculated from those of s-polarized light and p-polarized light. The transmittance curve log(Rt) plotted against the gap G is approximated by a straight line irrespective of the wavelength of the laser beam and the third medium M3.

As described above, the value of the gap G is determined by substituting the observed reflectance in that relation between the reflectance or transmittance and the gap G, which is calculated in advance.

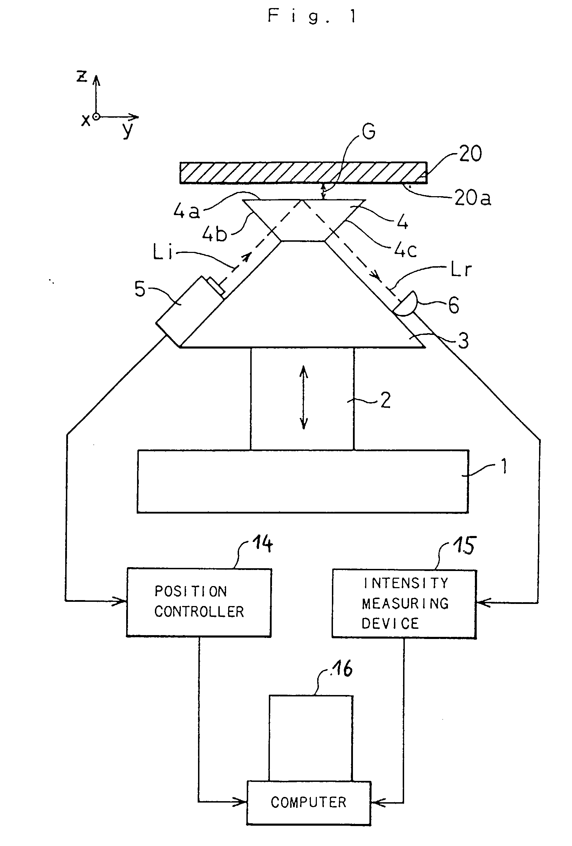

Fig. 1 is a schematic view illustrating the structure of a gap-measuring apparatus. The gap-measuring apparatus has a base 1, a piezoelectric actuator 2 attached to the base 1, and a trapezoid stand 3 further mounted on the piezoelectric actuator 2. The two slanted faces of the stand 3 are formed perpendicular to each other. A prism 4 is provided on the top of the stand 3. A laser source 5, e.g., GaAlAs laser, and a photosensor 6, e.g., a photo diode, are fixed on opposite ends of the slant faces of the stand 3.

The gap measuring apparatus further comprises a position controller 14, an intensity measuring device 15 and a computer 16. The position controller 14 is connected to the piezoelectric actuator 2 and drives the same. The intensity measuring device 15 is connected to the photosensor 6 and determines the intensity of light received by the photosensor 6. The computer 16 receives outputs from the position controller 14 and the intensity measuring device 15 and determines the value of the gap G as will be described later in detail.

The prism 4 is made of borosilicate glass (BK7) and its top surface 4a is held parallel to the surface of an x-y table (not shown) on which a specimen or test piece is fixed. The prism 4 is a rectangular prism having an incident surface 4b and an exit surface 4c perpendicular to each other. The surfaces 4b and 4c are inclined at an angle of 45 degrees to the top surface 4a. A specimen 20 is held above the prism 4 across a gap G with a holding mechanism (not shown) and has a lower face 20a approximately parallel to the top surface 4a of the prism 4.

The piezoelectric actuator 2 has a piezoelectric element extensible and contractible in the z direction. The stand 3 is movable in the z direction by controlling the voltage applied to the piezoelectric element.

A laser beam Li emitted from the laser source 5 enters the incident surface 4b of the prism 4 at an incident angle of 90 degrees and then on the top surface 4a at an incident angle of 45 degrees. Since the critical angle of incidence is 41.5 degrees under the conditions shown in Table 1, the total reflection conditions in terms of the geometrical optics are satisfied. A reflected light beam Lr perpendicularly going out through the exit surface 4c is detected by the photosensor 6.

The gap G is measured as follows: First the gap G is maintained to be several times as long as the wavelength $\lambda$ of the laser beam. The laser beam Li is then emitted and reflected by the prism 4; the photosensor 6 detects the intensity of the reflected light Lr. The laser beam Li is not transmitted through the gap which is several times the wavelength $\lambda$, but is totally reflected at the top surface 4a of the prism 4. The intensity of the reflected light Lr detected by the photosensor 6 represents the intensity Pi of the incident light Li accordingly. The stand 3 is then shifted up in the z direction by the piezoelectric actuator 2, whereby the gap G is decreased to be nearly equal to the wavelength $\lambda$.

The laser beam Li is again emitted and the intensity Pr of the reflected light Lr is detected by the photosensor 6. Part of the laser beam Li is transmitted into the specimen 20. The ratio of the intensity Pr of the reflected light Lr in this measurement to the intensity Pi of the incident light Li in the former measurement represents the reflectance Rr. The transmittance Rt (= 1 - Rr) is also obtained by calculation. For example, when the specimen 20 is made of silicon and the incident light Li is s-polarized light, the gap G responsive to the transmittance Rt can be found from Fig. 5A.

The gap G can be found with a look-up table representing, for example, the relationship shown in Fig. 5A; the value of the gap G may be calculated by interpolation, if necessary. Alternatively the gap G can be found in response to the transmittance Rt according to the equation (6a). The relationship between the transmittance Rt or the reflectance Rr and the gap G can be also expressed by various functions other than a linear function like equation (6a), e.g., high order, logarithmic, and exponential functions.

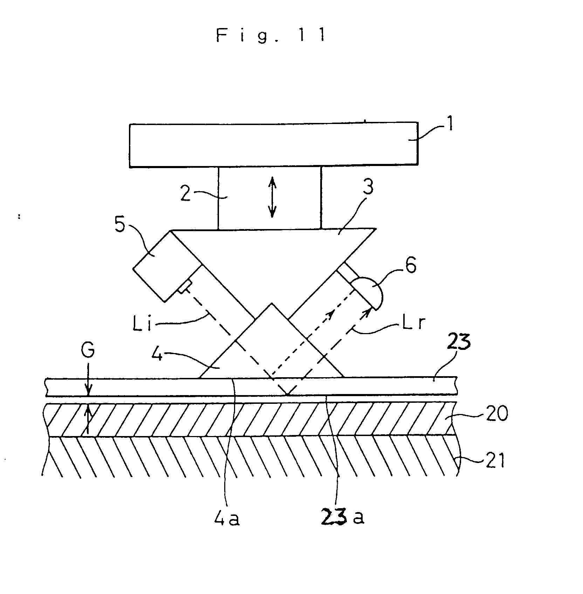

Fig. 11 is a schematic view of a proximity gap measuring apparatus. Proximity exposure is a method of printing a mask pattern onto flat panels of liquid crystal or on silicon wafers for semiconductor devices.

The apparatus, for example, measures a narrow gap between a photo resist applied on a silicon wafer and a photo mask in proximity exposure. The proximity gap measuring apparatus includes a base 1, a piezoelectric actuator 2, a stand 3, a prism 4, a laser source 5, and a photosensor 6, as is the case with the gap-measuring apparatus of Fig. 1. These elements are oriented upside-down to those of the apparatus shown in Fig. 1. A bottom surface 4a is in contact with a photo mask 23. The photo mask 23 is positioned above a photo resist 20 applied on a silicon wafer 21 across a gap G of about 1 μm, and is approximately in parallel with the upper surface of the photo resist 20.

The photo mask 23 is mainly composed of glass. As shown in Fig. 11, practically all of the laser beam Li emitted from the laser source 5 is transmitted through the bottom surface 4a of the prism 4 and reflected at a bottom surface 23a of the photo mask 23. The reflected light Lr then follows an optical path shown by a broken line in stead of one shown by a dotted line. The photosensor 6 has a specific receiving surface to ensure that it receives all of the reflected light Lr even when the optical path of the reflected light Lr is changed as stated above.

In the above situation, the prism 4 and the photo mask 23 as a whole act as a reflector. The photo mask 23 may be detached from the prism after measurement of the gap G.

The procedure for measuring the gap G is as follows: First, optical constants, i.e., refractive index and extinction coefficient, of the photo resist 20 applied on the silicon wafer 21 are measured by ellipsometry. At this stage, the photo mask 23 is distanced from the photo resist 20 by more than several times the wavelength λ of the laser beam. The intensity of the reflected light Lr, which is equal to that of incident light Li, is measured on this condition. Then the photo mask 23 is moved in proximity to the photo resist 20 in such a position as shown in Fig. 11, and the intensity of the reflected light Lr is measured. The dimension of the gap G is found based on the intensity of the incident light Li and that of the reflected light Lr.

The measurement of the absolute value of the gap G is not essential for repeatability of the proximity exposure as long as the gap G is controlled to have a desired constant value on every exposure. In order to achieve the constant gap G on every exposure, a distance between the photo mask 23 and the photo resist 20 is adjusted to attain a constant reflectance Rr. In this case, the optical constants of the photo resist 20 are not needed.

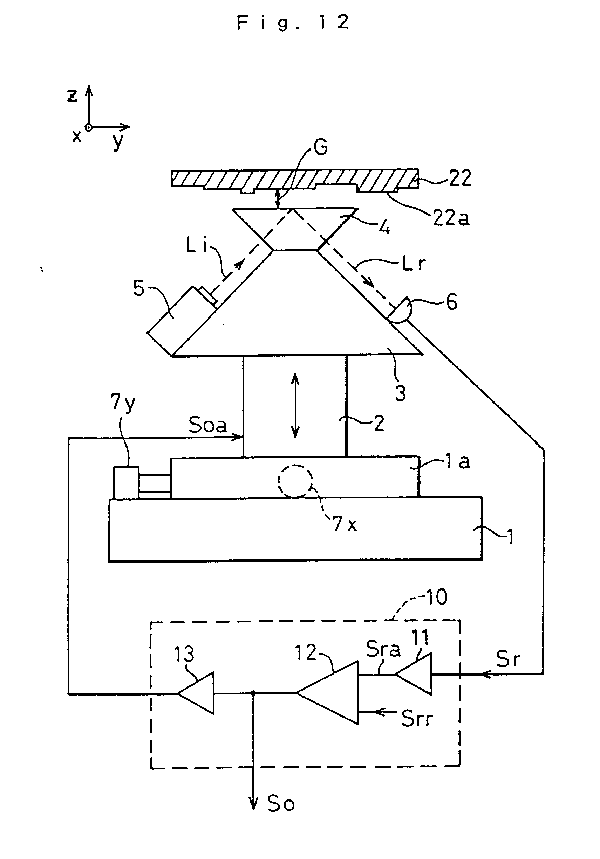

Fig. 12 is a schematic view illustrating an apparatus for detecting surface condition. The apparatus is efficiently used for measuring the unevenness of a surface of a specimen (or a test piece) 22. The surface condition detecting apparatus comprises an actuator 2, a stand 3, a prism 4, a laser source 5 and a photosensor 6, which are all located upon an x-y table 1a mounted on a base 1. The x-y table 1a is positioned in x and y directions with two high-precision ball screws driven by an x-direction driving motor 7x and a y-direction driving motor 7y, respectively. The apparatus further includes a servo amplifier circuit 10 having an amplifier 11, a comparator 12 and another amplifier 13 connected in series.

The unevenness of the surface 22a of the specimen 22 is measured as follows: When the photosensor 6 detects the intensity of the reflected light Lr, a signal Sr proportional to the intensity of the reflected light is supplied from the photosensor 6 to the amplifier 11. The amplifier 11 amplifies the signal Sr and supplies an amplified signal Sra to an input port of the comparator 12, which compares the amplified signal Sra with a reference signal Srr given to another input port of the comparator 12. The reference signal Srr represents a predetermined value of the gap G between the specimen 22 and the prism 4. The comparator 12 has a zero-shift function; that is, the comparator 12 outputs a signal S0 whose level is shifted in response to the levels of the signals Sra and Srr. The output signal So is amplified by the amplifier 13 to become a signal Soa, which is supplied to the piezoelectric actuator 2 for z direction. The amount of zero-shift applied by the comparator 12 increases or decreases in response to the levels of the signals Sra and Srr until the signals Sra and Srr become equal to each other. The signals So and Soa are being shifted therefore until the gap G between the specimen 22 and the prism 4 comes to be a predetermined constant value and until the signals Sra and Srr become equal to each other accordingly. Meanwhile the signal Soa drives the piezoelectric actuator 2 and moves the stand 3 in the z direction. The piezoelectric actuator 2 has a piezoelectric element which extends and contracts by an amount corresponding to the input signal Soa, which is directly proportional to the signal So outputted from the comparator 12. Therefore, the extension or contraction of the piezoelectric actuator 2 is proportional to the signal So. Accordingly the unevenness on the surface 22a of the specimen 22 can be found by converting the signal So into the amount of extension and contraction of the piezoelectric actuator 2.

The servo amplifying circuit 10 may be removed from the proximity gap measuring apparatus; in this case, the gap G is measured according to the relation between the transmittance or the reflectance and the gap G, such as that shown in Fig. 5A, while using the signal Sr outputted from the photosensor 6 as a signal representing the value of the transmittance or the reflectance. In this case, variation of the gap G on the x-y plane is measured by shifting the x-y table 1a with the motors 7x and 7y. The variation of the gap G represents unevenness on the surface 22a of the specimen 22.

Although GaAlAs and He-Ne lasers are preferably used in the above embodiment, they are replaceable with any other lasers. The wavelength of the laser beam depends upon the type of laser. The preferable size of a gap between the specimen and the prism or photo mask is one tenth to twice as long as the wavelength of the laser beam, or more particularly, almost the same as the wavelength for precise measurement with the gap-measuring apparatus or the surface condition detecting apparatus. A suitable laser source for precise measurement can therefore be chosen according to the dimension of a gap to be measured.

The specimen may be made of any materials, such as glass, silicon, silicon oxides, and photo resists. Materials with known optical constants are preferable because the use of those materials makes it easier to find the absolute value of the gap.

The piezoelectric actuator 2 may drive the specimen 20 or 22 instead of the stand 3. Another driving mechanism (or a first driving mechanism) for relatively moving the specimen and the prism in the direction varying the gap may be used in stead of the piezoelectric actuator 2. The piezoelectric actuator is, however, preferable since it controls a distance less than 1 micrometer with high precision. The driving motors 7x and 7y may be replaced by other driving mechanisms (or a second driving mechanism) for moving the specimen 22 relative to the x-y table 1a in the x and y directions.

Effects of Incident Angle and Polarization Plane Angle

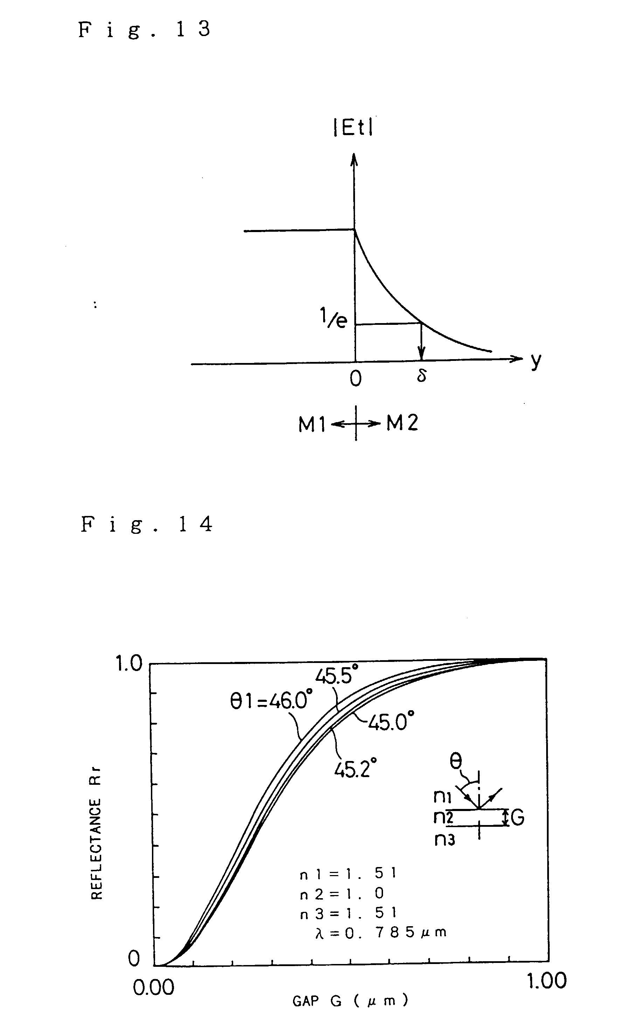

The electric field Et expressed as the equation (1) exponentially attenuates from the boundary between the medium M1 and the medium M2 (see Fig. 2 or Fig. 3) as shown in Fig. 13. The dimension of a gap is determined by utilizing the electric field Et extending or tunneling from the boundary between the medium M1 and the medium M2. The field depth $\delta$, which in the distance where the absolute value of the electric field Et is equal to 1/e, is defined as follows:

$$\delta = 1/(kt^*\alpha)$$

$$= \lambda/\{2\pi^*n2^*[n1^2/n2^2)^*(\sin\theta1)^2-1]^{0.5}\} \tag{7}$$

The equation (7) clearly shows that the field depth $\delta$ depends on the incident angle $\theta1$.

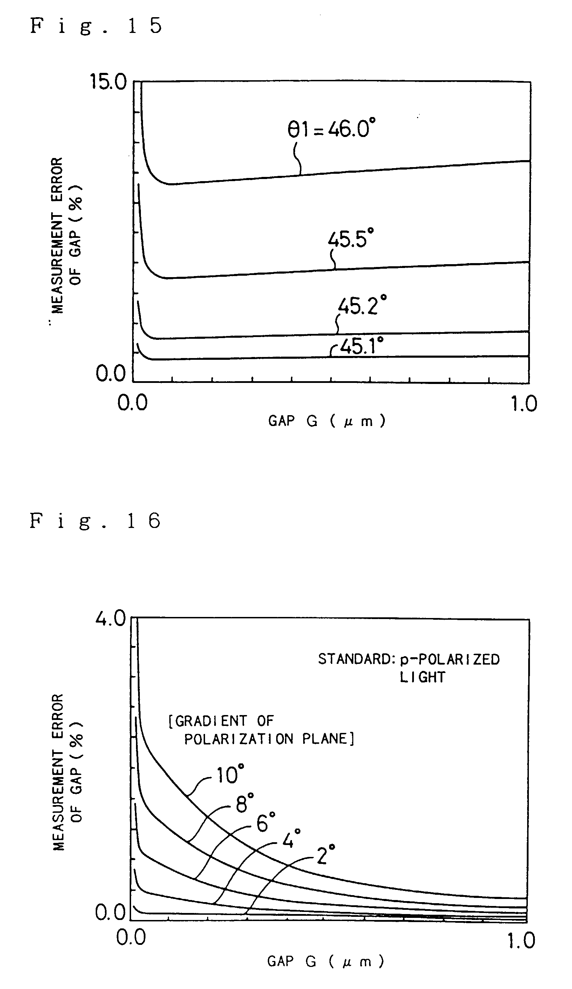

Fig. 14 is a graph showing the relationship between the gap G and the reflection factor Rr at certain incident angles $\theta1$. The graph demonstrates that the reflection factor Rr is significantly affected by the incident angle $\theta1$.

Fig. 15 is a graph showing variation in the measurement error of the gap G when the incident angle $\theta1$ is shifted from the standard angle of 45 degrees. For example, the precision of 0.1 degree is required for the incident angle $\theta1$ to make the measurement error in the range between plus and minus one percent. The precision of the incident angle $\theta1$ directly affects the measurement error of the gap G.

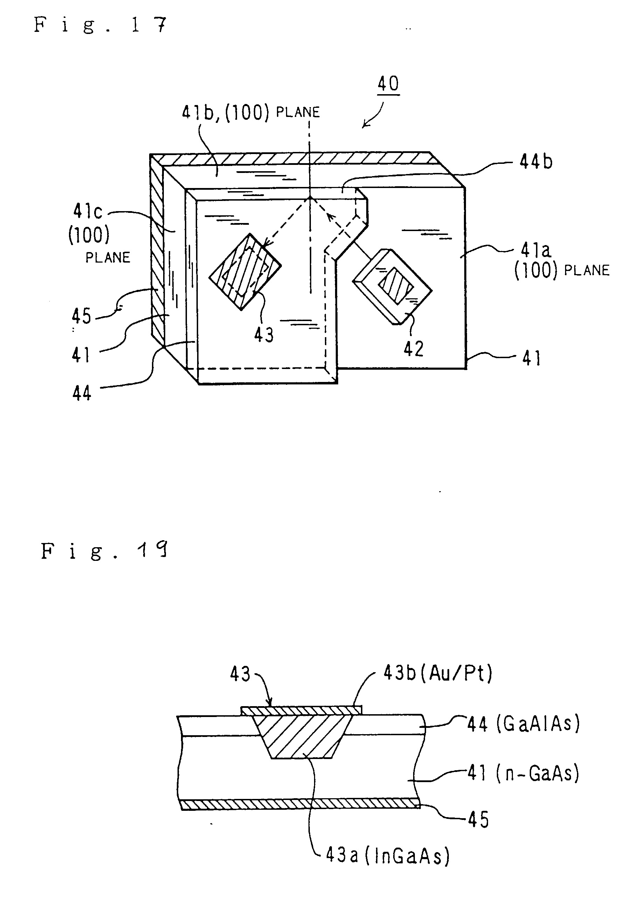

The radient of the polarization plane of incident light also affects the measurement error of the gap G. Fig. 16 is a graph showing the variation in the measurement error of the gap when the plane of polarization of incident light is inclined by certain degrees from the standard angle at which the incident light is p-polarized light. The gradient of the plane of polarization is to be set with the precision of six degrees so that the measurement error of the gap G is within the range between plus and minus one percent.

As described above, high-precision gap measurement utilizing the tunneling of the electric field requires the high precision setting of the incident angle and the gradient of the plane of polarization in the optical system. The following preferred embodiments of the present invention are optical measuring devices in which the incident angle and the gradient of the plane of polarization can be set with high precision.

Fig. 17 is a perspective view illustrating an optical measurement unit 40 embodying the invention. The optical measurement unit 40 has a distributed feedback semi conductor laser or DFB laser 42, a Schottky barrier photodiode 43, and a GaAlAs waveguide layer 44 integrally formed on a first main surface 41a of a plane (100) of a GaAs substrate 41. An electrode 45 is formed on a second main surface or rear surface of the substrate 41.

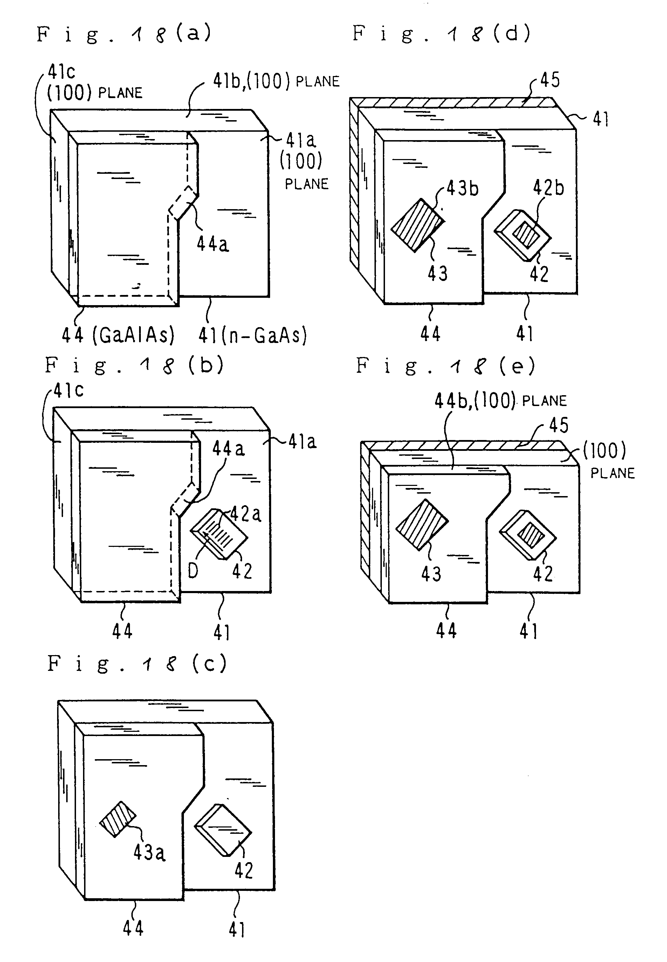

Figs. 18(a) through 18(e) are explanatory diagrams showing the manufacturing steps for the optical measurement unit 40. First, the GaAs substrate 41 is prepared as shown in Fig.18(a). The main surface 41a, a top surface 41b, and a side surface 41c of the substrate 41 are all cleavage (100) planes which are crystallographically equivalent to one another.

A GaAlAs crystalline layer is then epitaxially formed on the main surface 41a of the substrate 41. Part of the GaAlAs crystalline layer is removed by photo lithography, and the waveguide layer 44 having the shape shown in Fig. 18(a) is generated. The waveguide layer 44 has a side surface which includes two vertical flat parts and a slope 44a connecting the two flat parts. The slope part 44a of the side surface of the waveguide layer 44 forms a plane of incidence for the laser beam. The incidence plane 44a is perpendicular to the main surface 41a of the substrate 41.

The semi-conductor laser 42 is then formed on the main surface 41a of the substrate 41 as shown in Fig. 18(b). The semi-conductor laser 42 is a distributed feedback (DFB) laser composed of, for example, AlGaAs/GaAs layers. The AlGaAs and GaAs layers are respectively formed parallel to the main surface 41a of the substrate 41 by epitaxial growth. Details of the structure and characteristics of such DFB lasers should be referred to in 'Semi-Conductor Laser and Integrated Optics' (Yasuharu SUEMATSU; Ohm-sha; April 25, 1984, pp313-319). At the stage of manufacture shown in Fig. 18(b), an electrode is not yet formed on the top surface of the semi-conductor laser 42.

In a typical DFB laser, a grating or diffraction grating is formed on a specified AlGaAs layer by holographic exposure so as to be used as a resonator for the laser beam. A grating 42a is shown schematically by the parallel lines in Fig. 18(b). A laser beam emitted from the semi-conductor laser 42 travels in the direction defined by the projections and grooves of the grating 42a, that is, the direction D in Fig. 18(b). The accurate setting of the direction D of the grating 42a determines the direction of emission of the laser beam with high precision. In holographically exposing the grating 42a, the direction of the substrate 41 is adjusted in advance by rotating the substrate 41 around an axis perpendicular to the sheet of Fig. 18 while irradiating one of the cleavage planes, the side surface 41c for example, of the substrate 41 with a laser beam of a He-Ne laser and measuring the light reflected at the cleavage plane 41c. In this manner, the direction D of the grating 42a formed by holographic exposure is set to be perpendicular to the plane of incidence 44a of the waveguide layer 44.

Since the active layer of the DFB laser 42 is composed of GaAs, the waveguide layer 44 made of GaAs would absorb the laser beam emitted from the DFB laser 42. The waveguide layer 44 is thus preferably composed of GaAlAs which absorbs the laser beam less.

In the next step, an InGaAs layer 43a, which is a constituent of the photodiode 43, is formed on part of the waveguide layer 44 as shown in Fig. 18(c). In this step, a window or a recess is first formed in part of the waveguide layer 44 by conventional etching, and InGaAs is then embedded in the window by the molecular beam epitaxy (MBE) method or by the metal-organic chemical vapor deposition (MOCVD method . Fig. 19 is a cross sectional view of the photodiode 43. The InGaAs layer 43a is formed to pass through the waveguide layer 44a and be in contact with part of the substrate 41. The Schottky barrier photodiode 43 consists of the InGaAs layer 43a, an Au/Pt electrode 43b formed in the subsequent process, and the electrode 45 on the rear surface of the substrate 41. At the stage of manufacture shown in Fig. 18(c), the electrodes 43b and 45 shown in Fig. 19 are not yet formed.

The electrode 43b of the photodiode 43, an electrode 42b of the semi-conductor laser 42 and the electrode 45 on the rear surface of the substrate 41 are then formed as shown in Fig. 18(d).

The upper ends of the substrate 41 and the waveguide layer 44 are cleaved to form the clean (100) planes. A (100) plane 44b, or the top surface of the waveguide layer 44, forms a plane of reflection for the laser beam.

As described above, the optical measurement unit 40 has the semi-conductor laser 42, the photodiode 43 and the waveguide layer 44 formed on the main surfaces 41a of the substrate 41. The integrated arrangement of such optical elements on the substrate 41 allows precise adjustment of the incident angle of the laser beam. More particularly, the cleavage plane forming the reflecting surface 44b of the waveguide layer 44 allows the incident angle to be adjusted and controlled with a high precision. According to this embodiment, the semi conductor laser 42 is formed on the substrate 41 by epitaxial growth, and thus the direction of polarization of the laser beam is precisely and accurately determined. Accordingly, the optical measurement unit 40 according to this embodiment executes precise and accurate measurement of a gap.

The integrated arrangement of the optical elements on the substrate 41 makes the whole device insensitive to external vibration and allows stable measurement.

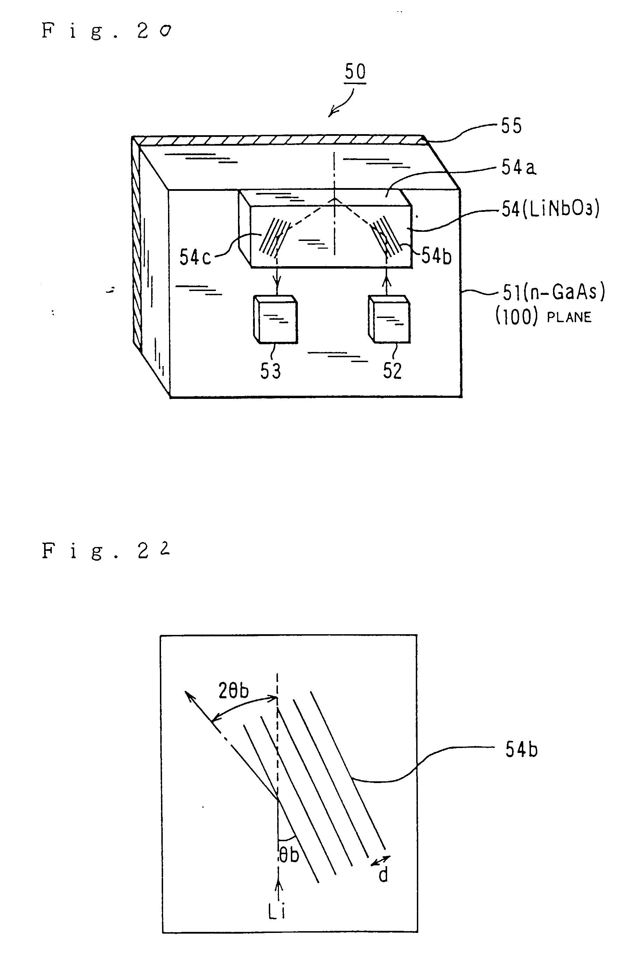

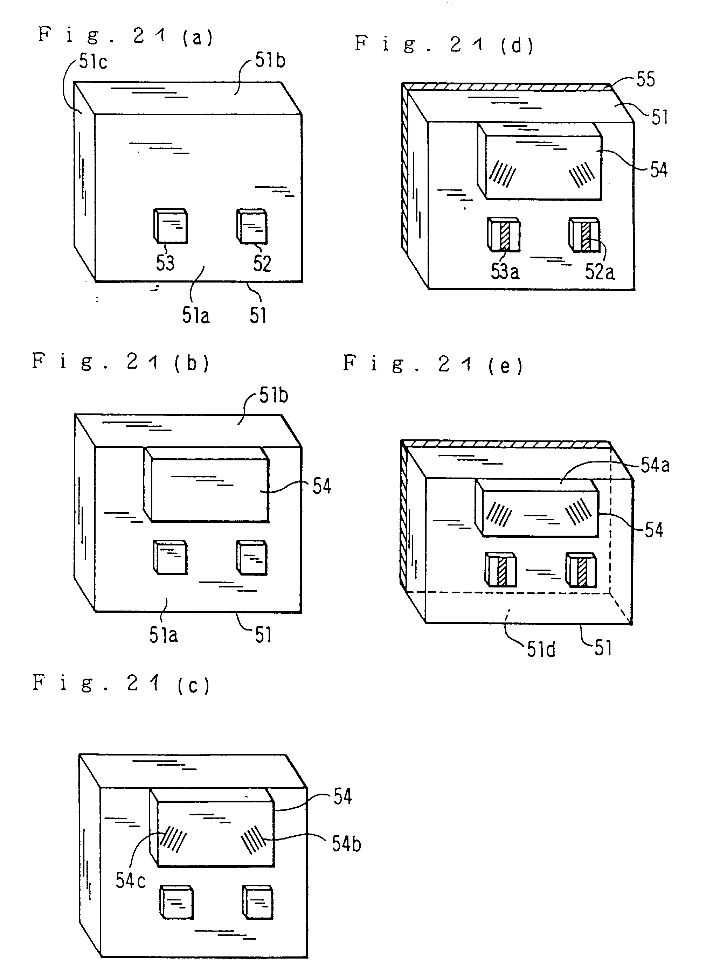

Fig. 20 is a perspective view illustrating another optical measurement unit 50 embodying the invention. The optical measurement unit 50 has a semi conductor laser 52, an optical detector 53, and a $LiNbO_3$ waveguide layer 54 formed on a first main surface 51a of a (100) plane of a GaAs substrate 51. An electrode 55 is formed on a second main surface or rear surface of the substrate 51. Two diffraction gratings 54b and 54c for altering the optical path of a laser beam are formed on the surface of the waveguide layer 54.

Figs. 21(a) through 21(e) are explanatory views showing the manufacturing steps of the optical measurement unit 50. First, the GaAs substrate 51 shown in Fig. 21(a) is prepared. The main surface 51a, a top surface 51b, and a side surface 51c of the substrate 51 are cleavage (100) planes which are crystallographically equivalent to one another.

The semi-conductor laser 52 and the optical detector 53 are formed on the main surface 51a of the substrate 51 as shown in Fig. 21(a). Both the semi-conductor laser 52 and the optical detector 53 include a laser element formed by epitaxial growth. In this embodiment, reflecting surfaces of the resonator of each laser element are formed by dry etching. The reflecting surfaces of the laser elements are formed parallel to the top surface 51b of the substrate 51, which is a (100) plane, because the (100) planes are easy to make parallel to each other.

Details of the structure and characteristics of such laser elements should be referred to in, for example, 'Semi-Conductor Laser and Integrated Optics" (Yasuharu SUEMATSU; Ohm-sha; April 25, 1984, p378).

The $LiNbO_3$ layer is precipitated on the main surface 51a of the substrate 51, and the waveguide layer 54 shown in Fig. 21(b) is prepared by removing part of the $LiNbO_3$ layer by photo lithography.

In the next step, the gratings 54b and 54c are formed on the surface of the waveguide layer 54 by holographic exposure as shown in Fig. 21(c). Fig. 22 is an explanatory view illustrating Bragg reflection in which the grating 54b deflects the direction of the incident light Li. As shown in Fig. 22, the direction of the incident light Li is shifted by $2\theta b$, that is, twice the incident angle $\theta b$ of the incident light Li on the grating 54b. For example, the optical path of the incident light Li is shifted by 45 degrees by arranging the projections and grooves of the grating 54b at an angle of 22.5 degrees to the incident light Li. The relationship between the wavelength $\lambda$ of laser beam and the grating constant d of the grating 54b is expressed as:

$$2d \sin\theta b = n \lambda \tag{8}$$

where n is an integer.

For exemple, when the wavelength $\lambda$ of laser beam is 0.84 micrometer, the grating constant d ot the grating 54b is 1.098 micrometer.

The direction of the projections and grooves of the gratings 54b and 54c is adjusted in the same manner as that of the grating 42a on the semi-conductor laser 42 of the optical measurement unit 40 described above.

In the next step, electrodes 52a and 53a are respectively formed on the surface of the semi-conductor laser 52 and the optical detector 53, and the electrode 55 on the rear surface of the substrate 51 as shown in Fig. 21(d).

The top surface 54a of the waveguide layer 54 functioning as the reflecting surface for laser beam is formed by polishing the surfaces of the waveguide layer 54 and the substrate 51. For polishing, a bottom surface 51d of the substrate 51 (Fig. 21(d)), previously formed as a cleavage plane, is fixed to a jig for polishing, so that the reflecting surface 54a for laser beam is finished to become parallel to the bottom surface 51d of the (100) plane. Current optical polishing technologies can make the parallel planes accurate to as high as five seconds, thus easily fulfilling the required precision of the incident angle and the plane of polarization, of six degrees.

In the optical measurement units 40 and 50 shown in Figs. 18 and 20, the direction of emission of semi-conductor laser, the plane of incidence for laser beam and the plane of reflection are set with respect to the cleavage plane of the substrate. The incident angle of the laser beam on the reflecting surface and the gradient of the plane of polarization are thereby determined with high precision. Accordingly, the gap is accurately and precisely measured with those optical measurement units.

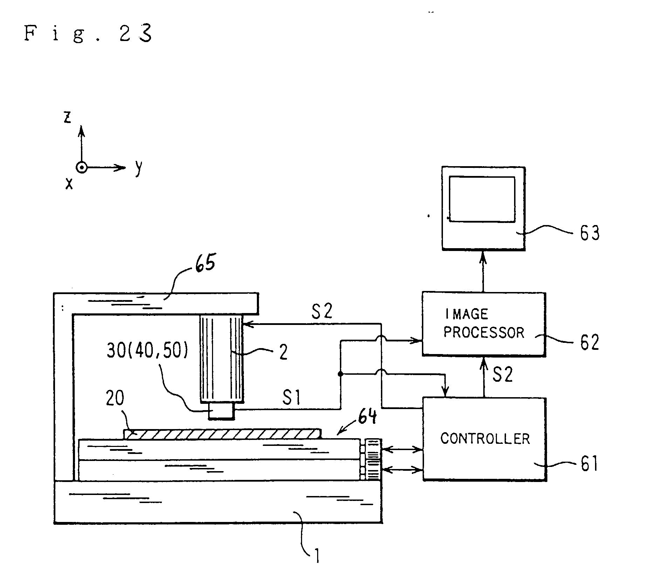

Fig. 23 is a schematic view illustrating another embodiment of the invention, an apparatus for detecting the surface condition, which utilizes the optical measurement unit described above. The surface-condition detecting apparatus is efficiently used for measuring the unevenness of the surface of a specimen 20 like a silicon wafer.

The surface-condition detecting apparatus includes: a base 1; an x-y table or a sample table 11 mounted on the base 1; an upright support 12 on the base 1; a piezoelectric actuator 2 disposed below the support 12; a controller 61 for controlling the x-y table 11 and the piezoelectric actuator 2; an image processor 62; and a monitor 63. The x-y table 11 is positioned in x and y directions with two precision ball threads driven by two driving motors.

The unevenness of the surface of the specimen 20 is detected according to the following steps. After the intensity of reflected light is measured by the optical measurement unit 30 (or 40 or 50), a signal S1 proportional to the intensity of reflected light is output from the optical measurement unit 30 to the controller 61. The controller 61 then regulates the expansion of the piezoelectric actuator 2 to make the level of the signal S1 constant, in other words, to make the gap between the optical measurement unit 30 and the specimen 20 constant. Since the piezoelectric actuator 2 is controlled to maintain a constant gap, the expansion of the piezoelectric actuator 2 represents the unevenness of the surface of the specimen 20. In general, the expansion of the piezoelectric actuator 2 is proportional to the level of a control signal S2 output from the controller 61. The image processor 62 detects the unevenness on the surface of the specimen 20 based on the control signal S2 output from the controller 61. Alternatively, the image processor 62 can detect the unevenness based on the signal S1 given from the optical measurement unit 30.

As the controller 61 actuates the x-y table 11 to move the specimen 20 in the x and y directions, the unevenness on the surface over the specimen 20 is efficiently measured in two dimensions. A resultant image showing the unevenness of the surface of the specimen 20 is displayed on the monitor 63.

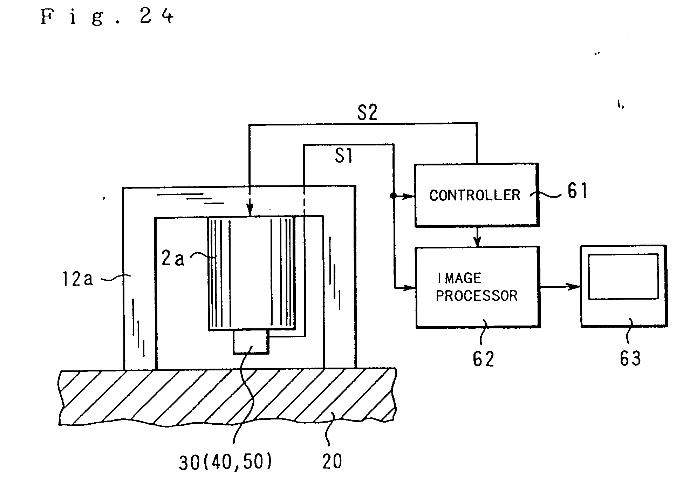

Fig. 24 is a schematic view illustrating a further embodiment of the invention, that is, another apparatus for detecting the surface condition. The surface-condition detecting apparatus includes: a support 12a mounted on the specimen 20; a three-dimensional piezoelectric actuator unit 2a disposed below the support 12a; the controller 61; the image processor 62; and the monitor 63.

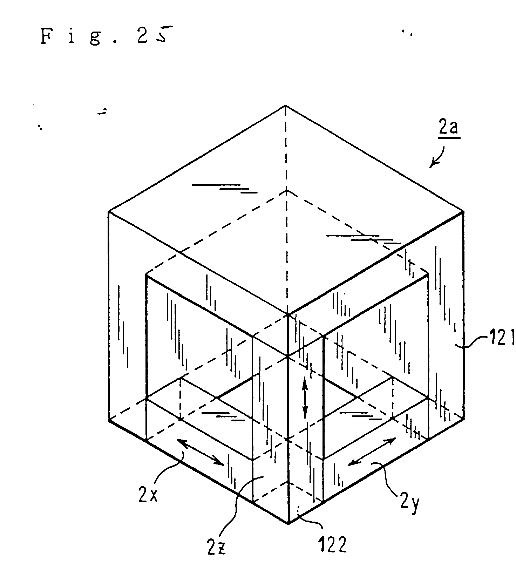

Fig. 25 is a schematic view showing an example of the three-dimensional piezoelectric actuator unit 2a, which includes three piezoelectric actuators 2x, 2y, and 2z respectively expanding in x, y, and z directions and being attached to inner surfaces of a base table 21, which has the shape of a cube a part of which is cut out into a smaller cubic space. The optical measurement unit 30 is fixed to a bottom surface 22 of the z-direction piezoelectric actuator 2z.

Operation of the surface-condition detecting apparatus of Fig. 24 is similar to that of Fig. 23 except for the following detail. In the apparatus of Fig. 24, the controller 61 controls the expansion of the three-dimensional piezoelectric actuator unit 2a in the x, y, and z directions and the image processor 62 thus detects unevenness in a narrower area with a higher precision compared with the apparatus of Fig. 23.

The invention is not limited to the above embodiments and there can be many modifications and changes without departing from the scope of the invention as follows:

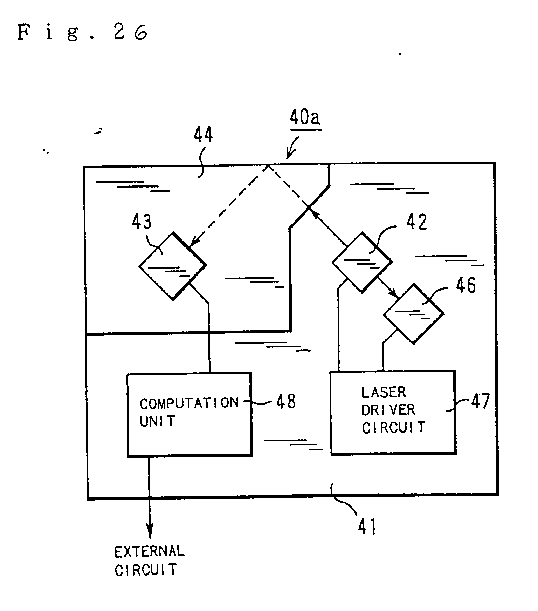

(1) In the above embodiments, the semi-conductor laser, the optical detector, and the waveguide layer with a reflecting surface are formed on the substrate, but other circuits can also be formed on the substrate. Fig. 26 is a schematic view showing a modified optical measurement unit 40a, which includes : a photodiode 46 for detecting and measuring the intensity of light emitted from the semi-conducted laser 42; a laser driver unit 47 to maintain the intensity of light emitted from the semi conductor laser 42 in response to the output of the photodiode 46; and a computation unit 48, as well as the elements shown in Fig. 17.

When the substrate 41 is made of GaAs, the photodiode 46, the laser driver unit 47, and the computation unit 48 can be integrated as a GaAs integrated circuit. This allows the whole proximity gap measuring device and the surface condition detecting apparatus to be made compact and small.

(2) Although the semi conductor substrate and other semi conductor elements are made of GaAs in the optical measurement units 40 and 50 in the above embodiments, they can be made of other semiconductor materials such as silicon and chemical semiconductor materials.

According to the present invention, a laser beam is reflected by a reflector under the condition of total reflection in terms of geometrical optic, and part of the laser beam reflected from the reflecting surface is transmitted into a specimen across a narrow gap by the tunnel effect, where the intensity of the reflected light varies with the dimension of the gap. The optical measuring device of the present invention measures and determines the narrow gap and surface unevenness based on the intensity of the reflected light and thus attains precise and accurate measurement.

Since the semi-conductor laser, the waveguide member, and the light receiving element are integrally formed on the substrate, the device is insensitive to undesirable vibration and influence of the environmental temperature, thus attaining high precision measurement.

An error in the incident angle of the laser beam on the reflecting surface generally affects the precision of measurement of the gap. In the present invention, however, the semi-conductor laser and the photosensor are formed on the semi-conductor substrate by epitaxial growth, and the reflecting surface of the waveguide is made parallel to a specific cleavage plane of the semi-conductor substrate. The direction of the reflecting surface and thereby the incident angle of laser beam are accurately and precisely determined. Therefore devices according to the present invention measure a gap or surface unevenness with high precision.

Although the present invention has been described and illustrated in detail, it is to be clearly understood that the same is by way of illustration and example only and is not to be taken by way of limitation, the present invention being limited only by the terms of the appended claims.

The features disclosed in the foregoing description and in the following claims may, both separately and in any combination thereof, be material for realising the invention in diverse forms thereof.

## Reference numeral list

| 1 | base |
|---|------|
| 2 | piezoelectric actuator |
| 2a | piezoelectric actuator unit |
| 2x | piezoelectric actuator |
| 2y | piezoelectric actuator |
| 2z | piezoelectric actuator |
| 3 | (trapezoid) stand |
| 4 | prism |
| 4a | top surface |
| 4b | incident surface |
| 4c | exit surface |
| 5 | laser source |
| 6 | photosensor |
| 7x | driving motor, x-direction |
| 7y | driving motor, y-direction |
| 10 | servo amplifier circuit |
| 11 | amplifier |
| 12 | comparator |
| 12a | support |
| 13 | amplifier |
| 14 | position controller |
| 15 | intensity measuring device |
| 16 | computer |

| 20 | specimen, photo resist |
|---|---|
| 20a | lower face |
| 21 | silicon wafer |
| 22 | specimen |
| 22a | surface |
| 23 | photo mask |
| 23a | bottom surface |

| 40 | optical measurement unit |
|---|---|
| 40a | modified optical measurement unit |
| 41 | substrate |
| 41a | first main surface |
| 41b | top surface |
| 41c | cleavage plane, side surface |
| 42 | laser |
| 42a | grating |
| 43 | photodiode |
| 43a | ingaas layer |
| 43b | au/pt electrode |
| 44 | waveguide layer |
| 44a | incidence plane, slope part |
| 45 | electrode |
| 46 | photodiode |
| 47 | driver unit |
| 48 | computation unit |

| 50 | optical measurement unit |
|---|---|
| 51 | substrate |
| 51a | first main surface |
| 51b | top surface |
| 51c | side surface |
| 51d | bottom surface |
| 52 | semiconductor laser |
| 52a | electrode |
| 53 | optical detector |
| 53a | electrode |
| 54 | waverguide layer |
| 54b | diffraction grating |
| 54c | diffraction grating |
| 55 | electrode |

| 61 | controller |
|---|---|
| 62 | image processor |
| 63 | monitor |
| 64 | sample table |
| 65 | upright support |

| 121 | base table |
|---|---|
| 122 | bottom surface |

## Claims

1. A device for measuring a gap (G) between a surface (20a) of a specimen (20) and a specific plane, comprising:

   a semiconductor substrate (41, 51);

   an optical waveguide (44, 54) having a reflecting plane (44b, 54a) as said specific plane, said optical waveguide being formed on said semiconductor substrate (41, 51) through semiconductor circuit fabrication process;

a laser source (42, 52), mounted on said semiconductor substrate (41, 51), for emitting a laser beam such that said laser beam passes through said optial waveguide (44, 54) to be reflected at said reflecting plane (44b, 54a) under geometric optical total reflection conditions; and

a photosensor (43, 53), mounted on said semiconductor substrate (41, 51), for measuring the intensity of said laser beam reflected by said reflecting plane (44b, 54a).

2. An optical measuring device as claimed in claim 1, characterized in that said photosensor (43) is a photodiode of a Shottky barrier type formed in a part of said optical waveguide (44).

3. An optical measuring device according to claim 1 or 2, characterized in that each of said substrate (41, 51), said laser source (42, 52), said photosensor (43, 53) is made of semiconductor material including gallium and arsenic; and said optical waveguide (44, 54) is made of semiconductor material including gallium, aluminium and arsenic.

4. An optical measuring device according to any of claims 1 to 3, characterized in that said laser source (42) comprises a resonator utilizing Bragg reflection of light wave.

5. An optical measuring device according to any of claims 1 to 4, characterized in that said optical waveguide (54) comprises a diffraction grating (54b) for deflecting said laser beam to be incident on said reflecting surface (54a) such that geometric optical total reflection occurs.

6. A method of manufacturing a device for measuring a gap (G) between a surface (20a) of a specimen (20) and a specific plane (44b), characterized by the steps of:

(a) preparing a semiconductor substrate (41);

(b) forming an optical waveguide layer (44) on a main surface of said semiconductor substrate (41) by epitaxial growth;

(c) forming a laser source (42) on said semiconductor substrate (41) for emitting a laser beam to be introduced into said optical waveguide layer (44);

(d) forming a photosensor (43) in a part of said optical waveguide layer (44) for receiving said laser beam; and

(e) shaping side surfaces (41b, 44b) of said semiconductor substrate (41) and said optical waveguide layer (44) to make a flat plane (41b, 44b) perpendicular to said main surfaces of said semiconductor substrate (41) such that laser beam output from said laser source (42) is reflected at said flat plane (41b, 44b) under the condition of geometric optical total reflection to be received by said photosensor (43).

7. A method according to claim 6, wherein said step (e) comprises the step of making said flat plane (41b, 44b) parallel to a cleavage plane (100) of said semiconductor substrate (41).

8. A method according to claim 6 or 7, wherein said step (c) comprises the steps of:

(c-1) forming a semiconductor layer (42); and

(c-2) forming a grating (42a) on said semiconductor layer (42) by holographic exposure, said grating functioning as a resonator of said laser source utilizing Bragg reflection of light wave.

9. A method of manufacturing a device for measuring a gap (G) between a surface (20a) of a specimen (20) and a specific plane (54a) characterized by the steps of:

(a) preparing a semiconductor substrate (51);

(b) forming an optical waveguide layer (54) on a main surface of said semiconductor substrate (51);

(c) forming a laser source on said substrate (51);

(d) forming a photosensor (53) on said substrate (51);

(e) forming a first grating (54b) on a surface of said optical waveguide layer (54) for deflecting a laser beam; and

(f) forming side surfaces (54a, 51b) of said semiconductor substrate (51) and said optical waveguide layer (54) to make a flat plane (54a, 51b) perpendicular to said main surface of said semiconductor substrate (51), whereby a laser beam output from said laser source (52) is deflected by said first grating (54b) and reflected at said flat plane (54a, 51b) under the condition of geometric optical total reflection to be received by said photosensor (53).

10. A method according to claim 9, wherein said step (e) includes a step of making said flat plane (54a, 51b) parallel to cleavage plane (100) of said semiconductor substrate (51).

11. A method according to claim 9 or 10, wherein said step (c) comprises the steps of:

(c-1) forming a semiconductor layer (54); and

(c-2) forming a second grating (54c) on said semiconductor layer (54) with holographic exposure, said second grating (54c) functioning as a resonator of said laser source (52) utilizing Bragg reflection of light wave.

**Patentansprüche**

1. Vorrichtung zum Messen eines Spaltes (G) zwischen einer Oberfläche (20a) eines Probeexemplars (20) und einer bestimmten Ebene, mit:

einem Halbleitersubstrat (41, 51);

einem optischen Wellenleiter (44, 54) mit einer reflektierenden Ebene (44b, 54a) als der bestimmten Ebene, wobei der optische Wellenleiter auf dem Halbleitersubstrat (41, 51) durch den Fabrikationsprozeß für die Halbleiterschaltung gebildet ist;

einer Laserquelle (42, 52), die auf dem Halbleitersubstrat (41, 51) angebracht ist, zum Emittieren eines Laserstrahls derart, daß der Laserstrahl durch den optischen Wellenleiter (44, 54) läuft, so daß er an der reflektierenden Ebene (44b, 54a) unter den geometrisch-optischen Bedingungen der Totalreflexion reflektiert wird; und

einem Photosensor (43, 53), der auf dem Halbleitersubstrat (41, 51) angebracht ist, zum Messen der Intensität des Laserstrahls, der von der reflektierenden Ebene (44b, 54a) reflektiert worden ist.

2. Optisches Meßgerät nach Anspruch 1, dadurch gekennzeichnet, daß der Photosensor (43) eine Photodiode vom Typ mit Schottky-Barriere ist, die in einem Teil des optischen Wellenleiters (44) ausgebildet ist.

3. Optische Meßvorrichtung nach Anspruch 1 oder 2, dadurch gekennzeichnet, daß sowohl das Substrat (41, 51), als auch die Laserquelle (42, 52) und der Photosensor (43, 53) aus Halbleitermaterial, einschließlich Gallium und Arsen, bestehen, und der optische Wellenleiter (44, 54) aus Halbleitermaterial, einschließlich Gallium, Aluminium und Arsen, hergestellt sind.

4. Optische Meßvorrichtung nach einem der Ansprüche 1 bis 3, dadurch gekennzeichnet, daß die Laserquelle (42) einen Resonator aufweist, der die Bragg-Reflexion der Lichtwelle benutzt.

5. Optische Meßvorrichtung nach einem der Ansprüche 1 bis 4, dadurch gekennzeichnet, daß der optische Wellenleiter (54) ein Beugungsgitter (54b) zum Ablenken des Laserstrahls aufweist, so daß er auf die reflektierende Fläche (54a) derart auftrifft, daß die geometrische optische Totalreflexion auftritt.

6. Verfahren zum Herstellen einer Vorrichtung zum Messen eines Spaltes (G) zwischen einer Oberfläche (20a) eines Probeexemplars (20) und einer bestimmten Ebene (44b), gekennzeichnet durch die Schritte:

(a) Bereitstellen eines Halbleitersubstrats (41);

(b) Bilden einer optischen Wellenleiterschicht (44) auf einer Hauptfläche des Halbleitersubstrates (41) durch epitaxiales Wachstum;

(c) Bilden einer Laserquelle (42) auf dem Halbleitersubstrat (41) zum Emittieren eines Laserstrahls, der in die optische Wellenleiterschicht (44) eingeleitet werden soll;

(d) Bilden eines Photosensors (43) in einem Teil der optischen Wellenleiterschicht (44) zum Empfangen des Laserstrahls; und

(e) Formen von Seitenflächen (41b, 44b) des Halbleitersubstrats (41) und der optischen Wellenleiterschicht (44), um eine flache Ebene (41b, 44b) senkrecht zu den Hauptflächen des Halbleitersubstrates (41) derart zu bilden, daß die Laserstrahlausgabe aus der Laserquelle (42) an der flachen Ebene (41b, 44b) unter der Bedingung geometrisch-optischer Totalreflexion reflektiert wird, so daß sie von dem Photosensor (43) aufgenommen wird.

7. Verfahren nach Anspruch 6, bei dem der Schritt (e) den Schritt des Einrichtens der flachen Ebene (41b, 44b) parallel zu einer Spaltungsfläche (100) des Halbleitersubstrats (41) aufweist.

8. Verfahren nach Anspruch 6 oder 7, bei dem der Schritt (c) die Schritte aufweist:

(c-1) Bilden einer Halbleiterschicht (42); und

(c-2) Bilden eines Gitters (42a) auf der Halbleiterschicht (42) durch holographische Belichtung, wobei das Gitter als ein Resonator der Laserquelle mit Ausnutzen der Bragg-Reflexion der Lichtwelle arbeitet.

9. Verfahren zum Herstellen einer Vorrichtung zum Messen eines Spaltes (G) zwischen einer Oberfläche (20a) eines Probeexemplars (20) und einer bestimmten Ebene (54a), gekennzeichnet durch die Schritte:

(a) Bereitstellen eines Halbleitersubstrats (51);

(b) Bilden einer optischen Wellenleiterschicht (54) auf einer Hauptfläche des Halbleitersubstrats (51);

(c) Bilden einer Laserquelle auf dem Substrat (51);

(d) Bilden eines Photosensors (53) auf dem Substrat (51);

(e) Bilden eines ersten Gitters (54b) auf einer Fläche der optischen Wellenleiterschicht (54) zum Ablenken eines Laserstrahls; und

(f) Formen von Seitenflächen (54a, 51b) des Halbleitersubstrats und der optischen Wellenleiterschicht (54), um eine flache Ebene (54a, 51b) senkrecht zu der Hauptfläche des Halbleitersubstrats (51) zu bilden, wodurch ein Laserstrahl, der von der Laserquelle (52) ausgegeben wird, von dem ersten Gitter (54b) abgelenkt und an der flachen Ebene (54a, 51b) unter der Bedingung geometrisch-optischer Totalreflexion reflektiert wird, so daß er von dem Photosensor (53) aufgenommen wird.

10. Verfahren nach Anspruch 9, bei dem der Schritt (e) einen Schritt des Einrichtens der flachen Ebene (54a, 51b) parallel zu einer Spaltungsfläche (100) des Halbleitersubstrats (51) umfaßt.

11. Verfahren nach Anspruch 9 oder 10, bei dem der Schritt (c) die Schritte aufweist:

(c-1) Bilden einer Halbleiterschicht (54); und

(c-2) Bilden eines zweiten Gitters (54c) auf der Halbleiterschicht (54) durch holographische Belichtung, wobei das zweite Gitter (54c) als ein Resonator der Laserquelle (52) durch Ausnutzen der Bragg-Reflexion der Lichtwelle arbeitet.

**Revendications**

1. Dispositif pour mesurer un espacement (G) entre une surface (20a) d'un échantillon (20) et un plan spécifique, comprenant :

   un substrat semiconducteur (41, 51) ;
   un guide d'ondes optique (44, 54) ayant un plan réfléchissant (44b, 54a) en tant que dit plan spécifique, ledit guide d'ondes optique étant formé sur ledit substrat semiconducteur (41, 51) par un processus de fabrication de circuit à semiconducteur ;
   une source laser (42, 52), montée sur ledit substrat semiconducteur (41, 51), pour émettre un faisceau laser de sorte que ledit faisceau laser passe à travers ledit guide d'ondes optique (44, 54) pour être réfléchi au niveau dudit plan réfléchissant (44b, 54a) sous des conditions de réflexion optique géométrique totale ; et
   un détecteur photosensible (43, 53), monté sur ledit substrat semiconducteur (41, 51), pour mesurer l'intensité dudit faisceau laser réfléchi par ledit plan réfléchissant (44b, 54a).

2. Dispositif de mesure optique selon la revendication 1, caractérisé en ce que ledit détecteur photosensible (43) est une photodiode du type à barrière de Schottky formée dans une partie dudit guide d'ondes optique (44).

3. Dispositif de mesure optique selon la revendication 1 ou 2, caractérisé en ce que chacun dudit substrat (41, 51), de ladite source laser (42, 52), dudit détecteur photosensible (43, 53) est fait d'une matière à semiconducteur incluant du gallium et de l'arsenic ; et ledit guide d'ondes optique (44, 54) est fait d'une matière à semiconducteur incluant du gallium, de l'aluminium et de l'arsenic.

4. Dispositif de mesure optique selon l'une quelconque des revendications 1 à 3, caractérisé en ce que ladite source laser (42) comprend un résonateur utilisant la réflexion de Bragg d'onde lumineuse.

5. Dispositif de mesure optique selon l'une quelconque des revendications 1 à 4, caractérisé en ce que ledit guide d'ondes optique (54) comprend un réseau de diffraction (54b) pour dévier ledit faisceau laser pour qu'il soit incident sur ladite surface réfléchissante (54a) de sorte que la réflexion optique géométrique totale se produise.

6. Procédé de fabrication d'un dispositif pour mesurer un espacement (G) entre une surface (20a) d'un échantillon (20) et un plan spécifique (44b), caractérisé par les étapes suivantes :

   (a) la préparation d'un substrat semiconducteur (41) ;
   (b) la formation d'une couche de guide d'ondes optique (44) sur une surface principale dudit substrat semiconducteur (41) par croissance épitaxiale ;
   (c) la formation d'une source laser (42) sur ledit substrat semiconducteur (41) pour émettre un faisceau laser à introduire dans ladite couche de guide d'ondes optique (44) ;
   (d) la formation d'un détecteur photosensible (43) dans une partie de ladite couche de guide d'ondes optique (44) pour recevoir ledit faisceau laser ; et
   (e) la mise en forme des surfaces latérales (41b, 44b) dudit substrat semiconducteur (41) et de ladite couche de guide d'ondes optique (44) pour fabriquer un plan plat (41b, 44b) perpendiculaire auxdites surfaces principales dudit substrat semiconducteur (41) de sorte que le faisceau laser sortant de ladite source laser (42) soit réfléchi au niveau dudit plan plat (41b, 44b), sous la condition de réflexion optique géométrique totale, pour être reçu par ledit détecteur photosensible (43).

7. Procédé selon la revendication 6, dans lequel ladite étape (e) comprend l'étape de fabrication dudit plan plat (41b, 44b) parallèle à un plan de clivage (100) dudit substrat semiconducteur (41).

8. Procédé selon la revendication 6 ou 7, dans lequel ladite étape (c) comprend les étapes suivantes :

   (c-1) la formation d'une couche de semiconducteur (42) ; et
   (c-2) la formation d'un sélecteur de mode (42a) sur ladite couche de semiconducteur (42) par une exposition holographique, ledit sélecteur de mode fonctionnant comme un résonateur de ladite source laser utilisant la réflexion de Bragg d'onde lumineuse.

9. Procédé de fabrication d'un dispositif pour mesurer un espacement (G) entre une surface (20a) d'un échantillon (20) et un plan spécifique (54a) caractérisé par les étapes suivantes :

(a) la préparation d'un substrat semiconducteur (51) ;
(b) la formation d'une couche de guide d'ondes optique (54) sur une surface principale dudit substrat semiconducteur (51) ;
(c) la formation d'une source laser sur ledit substrat (51) ;
(d) la formation d'un détecteur photosensible (53) sur ledit substrat (51) ;
(e) la formation d'un premier sélecteur de mode (54b) sur une surface de ladite couche de guide d'ondes optique (54) pour dévier un faisceau laser ; et
(f) la formation de surfaces latérales (54a, 51b) dudit substrat semiconducteur (51) et de ladite couche de guide d'ondes optique (54) pour fabriquer un plan plat (54a, 51b) perpendiculaire à ladite surface principale dudit substrat semiconducteur (51), de sorte qu'un faisceau laser sortant de ladite source laser (52) soit dévié par ledit premier sélecteur de mode (54b) et soit réfléchi au niveau dudit plan plat (54a, 51b) sous la condition de réflexion optique géométrique totale, pour être reçu par ledit détecteur photosensible (53).

10. Procédé selon la revendication 9, dans lequel ladite étape (e) comprend une étape de fabrication dudit plan plat (54a, 51b) parallèle au plan de clivage (100) dudit substrat semiconducteur (51).

11. Procédé selon la revendication 9 ou 10, dans lequel ladite étape (c) comprend les étapes suivantes :

(c-1) la formation d'une couche de semiconducteur (54) ; et
(c-2) la formation d'un second sélecteur de mode (54c) sur ladite couche de semiconducteur (54) par une exposition holographique, ledit second sélecteur de mode (54c) fonctionnant comme un résonateur de ladite source laser (52) utilisant la réflexion de Bragg d'onde lumineuse.

Fig. 1

F i g . 2

F i g . 3

Fig. 4A

REFLECTANCE Rr

s-POLARIZED LIGHT

GAP G (μm)

n1 = 1. 5103    k1 = 0. 0 (BK7)

n2 = 1. 0       k2 = 0. 0 (AIR)

n3 = 3. 673     k3 = 0. 005 (SILICON)

λ = 0. 827 μm (GaAℓAs LASER)

θ1 = 45°

Fig. 4B

REFLECTANCE Rr

1.0

0

0       0.5       1.0

GAP G (μm)

p-POLARIZED LIGHT

Fig. 4C

REFLECTANCE Rr

1.0

0

0       0.5       1.0

GAP G (μm)

(s+p) POLARIZED LIGHT

Fig. 5A

s-POLARIZED LIGHT

$\log Rt = -2.642G - 0.135$

TRANSMITTANCE Rt

GAP G ($\mu$m)

$n1 = 1.5103$   $k1 = 0.0$ (BK7)

$n2 = 1.0$   $k2 = 0.0$ (AIR)

$n3 = 3.673$   $k3 = 0.005$ (SILICON)

$\lambda = 0.827\mu$m (GaA$\ell$AsLASER)

$\theta1 = 45°$

Fig. 5B

log Rt = -2.216G + 0.345

Fig. 5C

log Rt = -2.291G + 0.165

Fig. 6A

s-POLARIZED LIGHT

BK 7 / AIR / S i

λ = 0 . 6 3 2 8 μ m

( H e − N e LASER)

Fig. 6B

p-POLARIZED LIGHT

BK 7 / AIR / S i

λ = 0 . 6 3 2 8 μ m

Fig. 7A

s-POLARIZED LIGHT

$\lambda = 0.827\mu m$

BK7/AIR/SiO2

TRANSMITTANCE Rt

GAP G ($\mu$m)

Fig. 7B

p-POLARIZED LIGHT

BK7/AIR/SiO2

$\lambda = 0.827\mu m$

TRANSMITTANCE Rt

GAP G ($\mu$m)

Fig. 8A

Fig. 8B

F i g . 9A

F i g . 9B

F i g . 1 0 A

F i g . 1 0 B

Fig. 11

Fig. 12

Fig. 13

Fig. 14

Fig. 15

Fig. 16

EP 0 511 660 B1

Fig. 17

Fig. 19

33

Fig. 18(a)

41c
(100) PLANE

41b,(100) PLANE

41a
(100)
PLANE

44a

44 (GaAlAs)    41(n-GaAs)

Fig. 18(b)

41c

44a

42a

41a

D    42

44    41

Fig. 18(c)

43a

42

44    41

Fig. 18(d)

45

41

43b    42b

43    42

44    41

Fig. 18(e)

44b,(100) PLANE

45

(100)
PLANE

43    42

44    41

Fig. 20

Fig. 22

Fig. 21 (a)

Fig. 21 (d)

Fig. 21 (b)

Fig. 21 (e)

Fig. 21 (c)

Fig. 23

EP 0 511 660 B1

Fig. 24

S2

S1

CONTROLLER — 61

IMAGE PROCESSOR

2a

12a

30(40,50)    20

62          63

Fig. 25

Fig. 26